# EUROPÄISCHE PATENTSCHRIFT

(11) **EP 0 460 403 B1**
(45) Veröffentlichungstag und Bekanntmachung des Hinweises auf die Patenterteilung: **20.03.1996**
(21) Anmeldenummer: 91107203.1
(22) Anmeldetag: 03.05.1991
(51) Int. Cl.: H04Q 3/62, H04M 11/00, H04Q 3/545, H04M 3/42

(54) **Verfahren für Datenübertragungen in Kommunikations-Vermittlungsanlagen**
Method for data transmission in communication exchange
Procédé pour la transmission de signaux de données dans des centraux de communication

(30) Priorität: 08.06.1990 DE 4018381
(43) Veröffentlichungstag der Anmeldung: 11.12.1991
(73) Patentinhaber: TELENORMA GMBH, D-60326 Frankfurt am Main (DE)
(72) Erfinder: Hintsteiner, Herbert, Ing. (grad.), A-6242 Kronberg (AT); Diehl, Joachim, Dipl.-Ing., W-6308 Butzbach (DE); Merten, Rainer, Dipl.-Phys., W-6370 Oberursel (DE)

(56) Entgegenhaltungen:
- EP-A- 0 460 404
- EP-A- 0 460 405
- DE-A- 3 407 265
- DE-A- 3 416 826
- DE-A- 3 542 969
- WESCON/87 CONFERENCE RECORD - PAPER 20/1 Bd. 31, 1987, LOS ANGELES (US) Seiten 1 - 5; GRIFFITH: 'ISDN - Gateway to Features and Services'

## Beschreibung

Die Erfindung betrifft ein Verfahren für Datenübertragungen in Kommunikations-Vermittlungsanlagen nach dem Oberbegriff des Patentanspruchs 1.

In der DE-OS 21 20 562 wird eine zeitmultiplexe Fernsprech-Vermittlungseinrichtung beschrieben, bei der die elementaren Leistungsmerkmale durch eine fest verdrahtete zentrale Steuereinrichtung verwirklicht werden, wobei für die Realisierung ergänzender Leistungsmerkmale ein Digitalrechner vorgesehen ist. Dieser Digitalrechner ist über einen zentralen Datenkanal direkt mit der zentralen Steuereinrichtung der Zeitmultiplex-Fernsprech-Vermittlungseinrichtung verbunden. Wenn ein Vermittlungswunsch auftritt, bei dem der Digitalrechner Funktionen zu erfüllen hat, so wird dieser durch eine Wahlinformation oder durch ein Steuerkennzeichen angesteuert. Weitere Eingaben, die notwendig sind, um ein bestimmtes Merkmal für einen Anschluß oder für eine Verbindung zu realisieren, verursachen jedesmal eine Belegung der zentralen Steuereinrichtung, um die entsprechende Einzeleingabe dem Digitalrechner mitzuteilen. Bei den von den Endgeräten aus einzugebenden Informationen handelt es sich in den meisten Fällen um gewählte Ziffern, welche im Digitalrechner einzeln empfangen werden müssen und erst dann ausgewertet werden können, wenn eine vollständige Eingabe vorliegt. Hierzu sind innerhalb des Digitalrechners einzelne Programme gespeichert, welche auf eine oder mehrere Arten von Dateneingaben speziell ausgelegt werden müssen.

Einzelheiten über die Programmstruktur in dem besagten Digitalrechner sind in den TN-Nachrichten 1974, Heft 75 ab Seite 27 beschrieben. In dem dort abgedruckten Aufsatz mit dem Titel: "Konzentrierte Ergänzungseinrichtung für Fernsprech-Nebenstellenanlagen" ist erwähnt, daß für jedes Merkmal ein spezifisches Rumpfprogramm vorgesehen ist. Derartige Programme müssen immer dann geändert oder erweitert werden, wenn neue Arten von Eingaben hinzukommen, weil beispielsweise andersartige Teilnehmerendgeräte an die Vermittlungsanlage angeschlossen werden, von wo aus von den bisher vorhandenen Eingabeprozeduren abweichende Eingaben kommen können. Das Ändern von Programmen ist also nicht nur dann erforderlich, wenn neue Merkmale hinzukommen, sondern auch dann, wenn für bestehende Merkmale andersartige Eingabeprozeduren verarbeitet werden sollen. Es muß also immer dann in die Programmstruktur eingegriffen werden, wenn neuartige Endgeräte hinzukommen. Wenn ein Ändern der Programme vermieden werden soll, so müssen die Endgeräte entsprechend angepaßt werden. Beide Maßnahmen sind unvorteilhaft, weil von Spezialisten zeitaufwendige Arbeiten durchzuführen sind.

Die Aufgabe der Erfindung besteht darin, ein Verfahren anzugeben, womit bei Datenübertragungen in Kommunikations-Vermittlungsanlagen die Belegungshäufigkeit der zentralen Steuereinrichtung stark reduziert wird und keine Programmänderungen in peripheren Einrichtungen erforderlich sind, wenn sich andere Eingabeprozeduren oder Eingabekonfigurationen ergeben.

Zur Lösung dieser Aufgabe ist eine Merkmalskombination vorgesehen, wie sie im Patentanspruch 1 angegeben ist.

Damit wird in vorteilhafter Weise erreicht, daß die zentrale Steuereinrichtung einer Kommunikations-Vermittlungsanlage nicht bei jeder einzelnen Eingabe erneut angereizt werden muß, sondern nur dann in Tätigkeit tritt, wenn ein gezielter Verbindungsaufbau möglich ist. Durch einfaches Ändern oder Hinzufügen von in Speichern abgelegten Parametern läßt sich erreichen, daß ohne Änderung vorhandener Programme neu hinzukommende oder geänderte Eingabeprozeduren beziehungsweise Eingabekonfigurationen verarbeitet werden können.

In den Unteransprüchen sind vorteilhafte Weiterbildungen und Ausgestaltungen der Erfindung angegeben.

Ein Ausführungsbeispiel der Erfindung wird nachfolgend anhand von Zeichnungen näher erläutert. Es zeigt
Fig. 1 das Blockschaltbild einer für Datenübertragung geeigneten Vermittlungsanlage, und
Fig. 2 das Blockschaltbild einer Verarbeitungseinrichtung.

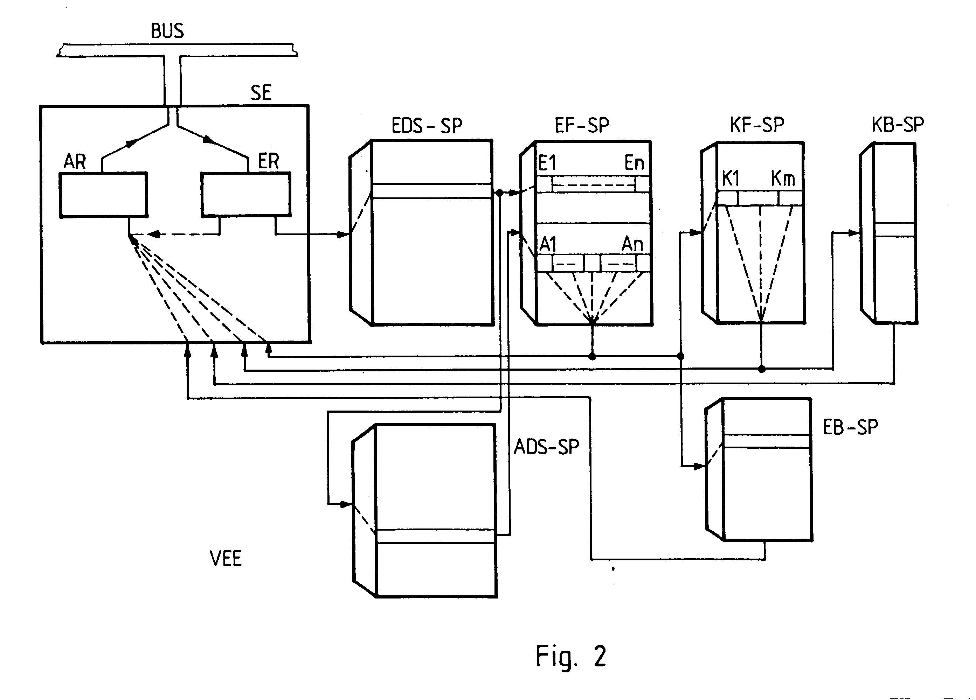

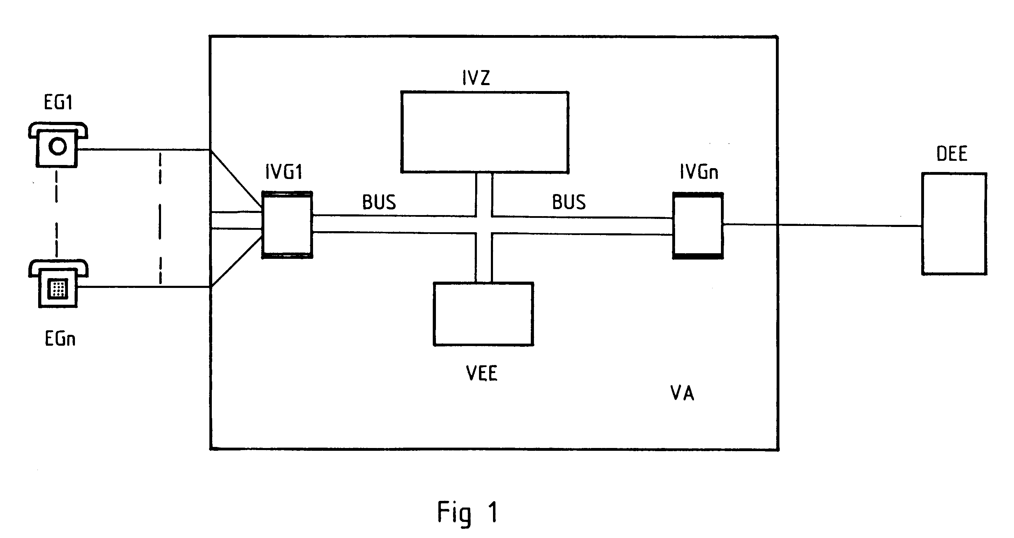

In der Fig. 1 ist eine Vermittlungsanlage VA dargestellt, welche eine zentrale Steuereinrichtung IVZ aufweist, die über ein Bussystem BUS mit den Anschlußgruppen zugeordneten Gruppensteuerwerken IVG1 bis IVGn verbunden ist. An dieses Bussystem BUS ist außerdem eine Verarbeitungseinrichtung VEE angeschlossen, welche später anhand der Fig. 2 näher erläutert wird. Es sei angenommen, daß ein Gruppensteuerwerk IVG1 für eine Gruppe von Fernsprech-Endgeräten EG1 bis EGn zuständig ist. Wenn von einem dieser Fernsprech-Endgeräte, z. B. EG1 aus eine Verbindung zu einer Datenendeinrichtung DEE hergestellt werden soll, so könnte sofort eine direkte Verbindung aufgebaut werden, wobei das Gruppensteuerwerk IVG1 die zentrale Steuereinrichtung IVZ anzureizen hätte, damit unter Mithilfe des für die Datenendeinrichtung DEE zuständigen Gruppensteuerwerkes IVGn eine Verbindung aufgebaut werden kann. Beim Verbindungsaufbau und auch bei allen folgenden Eingabeprozeduren würden zumindest die daran beteiligten Gruppensteuerwerke IVG1 und IVGn immer wieder belegt und in Einzelfällen auch die zentrale Steuereinrichtung IVZ angereizt. Außerdem würden die Eingabedaten unverändert zur Datenendeinrichtung DEE gelangen, was zur Folge hätte, daß diese mit jeder Art von Fernsprech-Endgeräten EG1 bis EGn und auch möglicherweise mit andersartigen Endgeräten zusammenarbeiten müßte.

Um dies zu vermeiden, und um einer Datenendeinrichtung DEE einheitlich formatierte Eingabedaten anbieten zu können, wird bei einer für Datenübertragung aufzubauenden Verbindung zunächst nur die Verarbeitungseinrichtung VEE angesteuert. Wenn also von einem Fernsprech-Endgerät EG1 aus die Kennziffer für den Aufbau einer Datenverbindung gewählt wird, so wird diese Kennziffer zunächst in dem zuständigen Gruppensteuerwerk IVG1 empfangen. Unter Mitwirkung der zentralen Steuereinrichtung IVZ wird nun lediglich eine direkte Verbindung zwischen dem Gruppensteuerwerk IVG1 und der Verarbeitungseinrichtung VEE hergestellt. Diese Verbindung verläuft über ein Bussystem BUS, woran die genannten Einrichtungen angeschlossen sind. Eine derartige Verbindung könnte jedoch auch über ein nicht dargestelltes Koppelfeld verlaufen. Das Endgerät EG1 ist nun zunächst ausschließlich mit der Verarbeitungseinrichtung VEE verbunden. Wenn diese Verbindung hergestellt ist, so kann eine Information von der Verarbeitungseinrichtung VEE aus an das Fernsprech-Endgerät EG1 abgegeben werden, damit der Benutzer aufgefordert wird, eine Dateneingabe vorzunehmen. Eine Verbindung zu dem gewünschten Datenendgerät DEE wird erst dann aufgebaut, wenn die Verarbeitungseinrichtung VEE erkannt hat, daß ein vollständiger Eingabedatensatz vorliegt, dessen Bestandteile auf Plausibilität und/oder Zulässigkeit geprüft worden sind. Die Datenendeinrichtung DEE bekommt dann die vom Fernsprech-Endgerät EG1 eingegebenen Informationen in Form eines Ausgabedatensatzes, welcher in der Verarbeitungseinrichtung VEE so zusammengestellt wird, daß das Datenendgerät DEE diese Information unmittelbar verarbeiten kann. Zwischen der Verarbeitungseinrichtung VEE und einer Datenendeinrichtung DEE kann auch eine Dauerverbindung bestehen.

Es wird auch von der Verarbeitungseinrichtung VEE nach Auswerten der Eingabeinformation die Zulässigkeit der Verbindung und der Betriebszustand der angeforderten Datenendeinrichtung DEE überprüft, so daß nur bei positivem Ergebnis dieser Prüfung von der Verarbeitungseinrichtung VEE aus eine Verbindung zu einer Datenendeinrichtung DEE hergestellt wird, und daß eine Information von der Verarbeitungseinrichtung VEE an das die Verbindung anfordernde Teilnehmerendgerät EG gesendet wird, die dem Benutzer Auskunft über den Verbindungszustand gibt.

Die zur Prüfung und Umsetzung der Eingabedaten in der Verarbeitungseinrichtung VEE ablaufenden Prozeduren werden nun im einzelnen anhand der Fig. 2 beschrieben. Wenn die Verarbeitungseinrichtung VEE durch Wahl einer Kennziffer von einem Fernsprech-Endgerät, z. B. EG1, aus angesteuert wird, so gelangt zunächst nur die gewählte Kennziffer und die Rufnummer oder Adresse des dem Fernsprech-Endgerät EG1 zugeordneten Anschlusses über das Bussystem BUS in das Eingaberegister ER der Steuereinrichtung SE und wird dort zwischengespeichert. Mit einer aus der dekodierten Kennziffer gewonnenen Adresse wird nun ein Eingabedatensatz-Speicher EDS-SP angesteuert. In der durch die Adresse selektierten Zeile des Eingabedatensatz-Speichers ist eine Datensatzkennung abgelegt, die unter anderem besagt, für welchen Zweck eine Datenübertragung stattfinden soll und welches Datenendgerät DEE dabei angesteuert werden muß. In der Datensatzkennung ist außerdem eine Adresse abgelegt, womit unmittelbar darauffolgend ein Elementefolgespeicher EF-SP angesteuert wird. Dort sind die zu dem betreffenden Eingabedatensatz gehörenden Eingabeelemente beschrieben.

Im Eingabedatensatz-Speicher EDS-SP ist für jeden Eingabedatensatz eine Speicherzeile vorgesehen, welche jeweils angibt, aus wieviel einzelnen Elementen E1 bis En ein Eingabedatensatz bestehen muß. Die Anzahl der Elemente wird dadurch ermittelt, daß der Elementanfangspointer vom Elementendpointer subtrahiert wird.

Auch die Reihenfolge der Elemente innerhalb eines Eingabedatensatzes ist in der betreffenden Zeile des Elementefolge-Speichers EF-SP abgelegt. Dieser Speicher kann wortweise, also elementeweise ausgelesen werden, wobei mit jedem Element gleichzeitig ein Komponentenfolge-Speicher KF-SP sowie ein Elementebeschreibungs-Speicher EB-SP angesteuert wird.

Im Elementebeschreibungs-SpeicherEB-SP ist in der durch ein Element angesteuerten Zeile abgelegt, aus wievielen Zeichen ein Element bestehen muß und in welchem Bereich sich der Inhalt eines Elementes bewegen darf. Es wird also festgelegt, ob in einem Element nur Ziffern, nur Alpha-Zeichen, nur Ja-Nein-Aussagen oder ähnliche Angaben sein dürfen.

Im Komponentenfolge-Speicher KF-SP ist in der mit einem Element E1 bis En angesteuerten Speicherzeile abgelegt, aus wievielen Komponenten, das heißt Zeichen,ein Element besteht und in welcher Reihenfolge diese abgelegt sein müssen. Bei einer Komponente kann es sich beispielsweise um ein Byte zur Darstellung eines Zeichens im ASCII-Code handeln oder um ein halbes Byte, beispielsweise zur Darstellung einer binärdezimal-codierten Ziffer. Auch der Komponentenfolge-Speicher KF-SP ist wortweise auslesbar, wobei mit jeder einzelnen Komponente ein Komponentenbeschreibungs-Speicher KB-SP adressiert wird. In diesem Komponentenbeschreibungs-Speicher ist für jede Kombination, welche sich aus der Dekodierung eines Bytes ergibt, ein Bit vorgesehen, welches eine Aussage über die Zulässigkeit des betreffenden Zeichens liefert. So kann beispielsweise angegeben sein, daß bei einer für die Eingabe von Ziffern vorgesehenen Komponente der Binärwert nicht größer als 10 sein darf. In diesem Beispiel wären also nur die Zeilen im Komponentenbeschreibungs-Speicher KB-SP mit einem die Zulässigkeit kennzeichnenden Bit beschrieben, welche sich ansteuern lassen, wenn eine Information in der betreffenden Komponente enthalten ist, deren Wert zwischen 0 und 9 liegt.

Auf diese Weise ist es möglich, mit Hilfe der Steuereinrichtung SE innerhalb der Verarbeitungseinrichtung VEE einen Eingabedatensatz bis in alle Einhelheiten vollständig zu analysieren. Es kann somit festgestellt werden, ob im Eingaberegister ER ein vollständiger Datensatz vorliegt, dessen einzelne Elemente, jedes für sich betrachtet, plausibel und zulässig sind. Erst dann, wenn festgestellt wird, daß der zu einem Merkmal gehörende Eingabedatensatz vollständig ist, das heißt genügend zulässige und plausible Angaben enthält, wird eine Verbindung zu einer für das betreffende Merkmal vorgesehenen Datenendeinrichtung DEE aufgebaut oder aktiviert. Die dazu notwendigen Angaben liefert die Verarbeitungseinrichtung VEE über das Bussystem BUS an die zentrale Steuereinrichtung IVZ und die Gruppensteuereinrichtungen IVG1 sowie IVGn der Kommunikations-Vermittlungsanlage VA.

Außerdem wird in einem Ausgaberegister AR ein Ausgabedatensatz zusammengestellt, dessen Beschaffenheit aus einem Ausgabedatensatz-Speicher ADS-SP ausgelesen wird. Dieser Ausgabendatensatz ist in einer Zeile dieses Speichers ADS-SP abgelegt, welche mit Angaben aus dem Eingabedatensatz-Speicher EDS-SP adressiert wird. Der Ausgabedatensatz ist so formatiert und enthält in einer vorbestimmten Reihenfolge die Daten so, daß sie unmittelbar von der Datenendeinrichtung DEE verarbeitet werden können.

Mit den in der Verarbeitungseinrichtung VEE ablaufenden Verfahrensschritten können beliebige Eingabedatensätze in jeweils auf das betreffende Datenendgerät DEE abgestimmte Ausgabedatensätze umgesetzt werden. Für einen neu hinzukommenden Endgerätetyp, z. B. EGn muß lediglich in die Speicher EDS-SP, EF-SP, EB-SP, KF-SP und KB-SP der Verarbeitungseinrichtung VEE die Beschreibung eines neuen Eingabedatensatzes eingegeben werden, welcher für jedes von dem betreffenden Endgerät EGn ansteuerbare Merkmal anzugeben ist. Somit läßt sich jedes Eingabe-Endgerät an bereits vorhandene Strukturen anpassen, ohne daß in dem betreffenden Eingabe-Endgerät oder in Datenendeinrichtungen DEE Änderungen notwendig sind. Auch wenn neue Datenendeinrichtungen DEE hinzukommen oder gegen andere ausgetauscht werden, welche andere Datensätze verlangen, so ist es lediglich erforderlich, im Ausgabedatensatz-Speicher ADS-SP die Konfiguration eines für das betreffende Datenendgerät DEE passenden Datensatzes einzuspeichern. Somit kann eine jede Datenendeinrichtung DEE an bereits vorhandene Strukturen angepaßt werden, ohne daß in der betreffenden Datenendeinrichtung DEE Programmänderungen oder sonstige Modifikationen notwendig sind. Die dabei entstehenden Ausgabedatensätze werden ausgehend vom Ausgabedatensatz-Speicher ADS-SP ebenso auf Plausibilität und Zulässigkeit überprüft, wie dies für die Eingabedatensätze beschrieben worden ist. Dabei werden im Elementefolge-Speicher EF-Sp Zeilen angesteuert, welche Angaben über Ausgabeelemente A1 bis An enthalten.

Es ist auch möglich, daß von der Datenverarbeitungseinrichtung VEE an das Teilnehmerendgerät EG Informationen gesendet werden, um dem Benutzer Bedienungshinweise zu geben, und daß diese Bedienungshinweise je nach Endgerättyp hörbar und/oder sichtbar sind.

## Patentansprüche

1. Verfahren für Datenübertragungen in Kommunikations-Vermittlungsanlagen, wobei durch Wählen von Kennziffern von einem Teilnehmer-Endgerät aus eine Verbindung zu einer Datenendeinrichtung aufgebaut werden kann, um Daten zu übertragen und/oder Merkmale zu aktivieren, dadurch gekennzeichnet,
daß beim Anwählen einer für Datenverbindungen vorgesehenen Verkehrsrichtung nach dem Empfang der Kennziffern und unter Mitwirkung einer zentralen Steuereinrichtung (IVZ) zunächst nur eine Verbindung zu einer Verarbeitungseinrichtung (VEE) hergestellt wird, welche von der zentralen Steuereinrichtung (IVZ) die Identität und die Eigenschaften eines anrufenden Teilnehmer-Endgerätes übermittelt bekommt und die von dort abgegebene Wahlinformation sowie die Eingabeinformation empfängt,
daß in der Verarbeitungseinrichtung (VEE) mit den in einem Eingaberegister (ER) aufgenommenen Eingabeinformationen verschiedene Speicher (EDS-SP, EF-SP, EB-SP, KF-SP, KB-SP) angesteuert werden, um die gesamten Eingabeinformationen auf Plausibilität und Vollständigkeit zu überprüfen,
daß nach positivem Abschluß dieser Prüfung ein Ausgabedatensatz-Speicher (ADS-SP) angesteuert wird, worin die Konfiguration von jeweils zu den Eingabeinformationen gehörenden Ausgabedatensätzen abgelegt sind,
und daß erst dann eine Datenverbindung zu einer Datenendeinrichtung (DEE) aufgebaut wird, wenn mindestens ein zu einer vollständigen Eingabeinformation gehörender vollständiger Ausgabedatensatz von der Verarbeitungseinrichtung (VEE) zusammengestellt worden ist.

2. Verfahren nach Anspruch 1,
dadurch gekennzeichnet,
daß von der Verarbeitungseinrichtung (VEE) nach Auswerten der Eingabeinformation die Zulässigkeit der Verbindung und der Betriebszustand der angeforderten Datenendeinrichtung (DEE) überprüft wird, daß nur bei positivem Ergebnis dieser Prüfung von der Verarbeitungseinrichtung (VEE) aus eine Verbindung zu einer Datenendeinrichtung (DEE) hergestellt wird, und daß eine Information von der Verarbeitungseinrichtung (VEE) an das die Verbindung anfordernde Teilnehmer-Endgerät (EG) gesendet wird, die dem Benutzer Auskunft über den Verbindungszustand gibt.

3. Verfahren nach Anspruch 1,
dadurch gekennzeichnet,
daß von der Verarbeitungseinrichtung (VEE) an das Teilnehmer-Endgerät (EG) Informationen gesendet werden, um dem Benutzer Bedienungshinweise zu geben,
und daß diese Bedienungshinweise je nach Endgerätetyp hörbar und/ oder sichtbar sind.

4. Verfahren nach Anspruch 1,
dadurch gekennzeichnet,
daß die unterschiedlichen Eingabeinformationen innerhalb der Verarbeitungseinrichtung (VEE) je nach Art der Datenverbindung so umgesetzt und/oder zusammengestellt werden, daß sie unmittelbar von der betreffenden Datenendeinrichtung (DEE) aufgenommen und verarbeitet werden können.

5. Verfahren nach Anspruch 4,
dadurch gekennzeichnet,
daß die zur Auswertung und Umsetzung der Eingabeinformation in eine Ausgabeinformation notwendigen Parameter anwendungsbezogen in den Speichern (EDS-SP, EF-SP, EB-SP, KF-SP, KB-SP und ADS-SP) der Verarbeitungseinrichtung (VEE) abgelegt sind.

6. Verfahren nach Anspruch 1,
dadurch gekennzeichnet,
daß in der Verarbeitungseinrichtung (VEE) eine stufenweise Überprüfung der jeweiligen Eingabeinformation erfolgt, indem zunächst ein Eingabedatensatz-Speicher (EDS-SP) angesteuert wird,
daß mit der dabei ausgelesenen Information ein Elementefolgespeicher (EF-SP) adressiert wird, womit ein Elementebeschreibungs-Speicher (EB-SP) und ein Komponentenfolge-Speicher (KF-SP) angesteuert wird, von dem aus ein Komponentenbeschreibungs-Speicher (KB-SP) adressiert wird, so daß jedes einzelne Zeichen auf Vorhandensein und Zulässigkeit geprüft wird.

7. Verfahren nach Anspruch 6,
dadurch gekennzeichnet,
daß jeder Speicher (EDS-SP, EF-SP, KF-SP, EB-SP, KB-SP und ADS-SP) oder der entsprechende Speicherbereich für die Eingabe der jeweils erforderlichen Parameter einzeln ansteuerbar ist.

## Claims

1. Method for data transmissions in communication exchanges, it being possible to establish a link from a subscriber terminal to a data terminal unit by selecting code numbers in order to transmit data and/or activate features, characterized in that when a traffic direction, provided for data links, is selected, after the reception of the code numbers and with the accompanying action of a centralized control device (IVZ) initially only one link to a processing device (VEE) is established, which processing device (VEE) is informed by the centralized control device (IVZ) of the identity and the properties of a calling subscriber terminal and receives the dialling information output from there as well as the input information, in that various memories (EDS-SP, EF-SP, EB-SP, KF-SP, KB-SP) are actuated in the processing device (VEE) with the input information held in an input register (ER), in order to check all the input information for plausibility and completeness, in that, after a positive conclusion of this test, an output data set memory (ADS-SP), in which the configuration of output data sets associated with the respective input information is stored, is actuated, and in that a data link to a data terminal unit (DEE) is not established until at least one complete output data set associated with a complete item of input information has been assembled by the processing device (VEE).

2. Method according to Claim 1, characterized in that the reliability of the link and the operating state of the requested data terminal unit (DEE) is checked by the processing device (VEE) after the input information is evaluated, in that a link with a data terminal unit (DEE) is only established from the processing device (VEE) if this test has a positive result, and in that an item of information is transmitted from the processing device (VEE) to the subscriber terminal (EG) requesting the link which provides the user with information on the state of the link.

3. Method according to Claim 1, characterized in that information is transmitted from the processing device (VEE) to the subscriber terminal (EG) in order to provide the user with operating instructions, and in that depending on the type of terminal these operating instructions are audible and/or visible.

4. Method according to Claim 1, characterized in that the different input information within the processing device (VEE) is converted and/or collected, depending on the type of data link, in such a way that it can be received and processed directly by the respective data terminal unit (DEE).

5. Method according to Claim 4, characterized in that the parameters necessary for evaluating and converting the input information into an item of output information are stored in the memories (EDS-SP, EF-SP, EB-SP, KF-SP, KB-SP and ADS-SP) of the processing device (VEE) in an application-related manner.

6. Method according to Claim 1, characterized in that incremental checking of the respective input information takes place in the processing device (VEE) in that initially an input data set memory (EDS-SP) is actuated, in that an element sequence memory (EF-SP) is addresssed with the information read out during this process, an element description memory (EB-SP) and a component sequence memory (KF-SP) being actuated, a component description memory (KB-SP) being addressed from the said component sequence memory (KF-SP) so that each individual symbol is tested for presence and reliability.

7. Method according to Claim 6, characterized in that each memory (EDS-SP, EF-SP, KF-SP, EB-SP, KB-SP and ADS-SP) or the corresponding memory location can be actuated individually for inputting the respectively required parameters.

## Revendications

1. Procédé de transmission de données dans des centraux de communication, selon lequel, par la sélection de chiffres caractéristiques d'un terminal d'abonné, on peut établir une liaison avec un terminal de données pour transmettre des données et/ou activer des caractéristiques, procédé caractérisé en ce que :
- par la sélection d'un sens de circulation prévu pour les liaisons de données, après la réception des chiffres caractéristiques et en coopérant avec une installation de commande centrale (IVZ), tout d'abord on établit seulement une liaison vers une installation de traitement (VEE) qui reçoit de l'installation de commande centrale (IVZ), l'identité des caractéristiques d'un terminal d'abonné appelant et reçoit l'information de sélection ainsi émise et l'information d'entrée,
- dans l'installation de traitement (VEE) on commande avec les informations d'entrée reçues par un registre d'entrée (ER), différentes mémoires (EDS-SP, EF-SP, EB-SP, KF-SP, KB-SP) pour contrôler l'ensemble des informations d'entrée quant à leur plausibilité et à leur état complet,
- après conclusion positive de ce contrôle, on commande une mémoire de jeu de données de sortie (ADS-SP) et on enregistre la configuration des jeux de données d'entrée appartenant aux informations d'entrée,
- et seulement alors on établit une liaison de données vers un terminal de données (DEE) si l'installation de traitement (VEE) a composé au moins un jeu de données de sortie, complet, appartenant à une information d'entrée complète.

2. Procédé selon la revendication 1, caractérisé en ce qu'après exploitation de l'information d'entrée, l'installation de traitement (VEE) contrôle la fiabilité de la liaison et l'état de fonctionnement du terminal de données (DEE) demandé, et seulement en cas de résultat positif de ce contrôle, l'installation de traitement (VEE) établit une liaison vers le terminal de données (DEE) et une information est émise par l'installation de traitement (VEE) vers le terminal d'abonné (EG) demandant la liaison, information qui donne à l'utilisateur des renseignements concernant l'état de la liaison.

3. Procédé selon la revendication 1, caractérisé en ce que l'installation de traitement (VEE) transmet des informations au terminal d'abonnés (EG) pour fournir des indications de fonctionnement à l'utilisateur, indications de fonctionnement qui sont vocales et/ou visibles selon le type de terminal.

4. Procédé selon la revendication 1, caractérisé en ce que les différentes informations d'entrée sont converties et/ou composées dans l'installation de traitement (VEE) suivant le type de liaison de données, pour pouvoir les recevoir directement par le terminal de données (DEE) concerné et permettre leur traitement.

5. Procédé selon la revendication 4, caractérisé en ce que les paramètres nécessaires à l'exploitation et à la conversion de l'information d'entrée en une information de sortie, sont enregistrés liés à leur application dans des mémoires (EDS-SP, EF-SP, EB-SP, KF-SP, KB-SP et ADS-SP) de l'installation de traitement (VEE).

6. Procédé selon la revendication 1, caractérisé en ce que l'installation de traitement (VEE) fait un contrôle par étapes de l'information d'entrée respective en commandant tout d'abord une mémoire de jeu de données d'entrée (EDS-SP), en adressant, avec l'information lue, une mémoire récurrente d'éléments (EF-SP), et en commandant une mémoire de description d'éléments (EB-SP) et une mémoire récurrente de composants (KF-SP), puis, de là, on adresse une mémoire de description de composants (KB-SP) pour contrôler la présence et la fiabilité de chaque signe séparé.

7. Procédé selon la revendication 6, caractérisé en ce que chaque mémoire (EDS-SP, EF-SP, KF-SP, EB-SP, KB-SP et ADS-SP), ou la zone de mémoire correspondante, se commande séparément pour l'entrée des paramètres chaque fois nécessaires.
